# EUROPÄISCHE PATENTSCHRIFT

(11) **EP 2 321 115 B1**
(45) Veröffentlichungstag und Bekanntmachung des Hinweises auf die Patenterteilung: **09.04.2014**
(21) Anmeldenummer: 09777641.3
(22) Anmeldetag: 04.08.2009
(51) Int. Cl.: B29C 65/16, B32B 27/28

(54) **VERFAHREN ZUR HERSTELLUNG EINES VERBUNDTEILS DURCH DURCHSTRAHLLASERSCHWEISSEN**
METHOD FOR PRODUCING A COMPOSITE PART BY TRANSMISSION LASER WELDING
PROCÉDÉ DE FABRICATION D'UNE PIÈCE COMPOSITE PAR SOUDAGE LASER PAR RAYONNEMENT

(30) Priorität: 05.08.2008 DE 102008036467
(43) Veröffentlichungstag der Anmeldung: 18.05.2011
(73) Patentinhaber: Fresenius Medical Care Deutschland GmbH, 61352 Bad Homburg (DE)
(72) Erfinder: KUGELMANN, Franz, 66606 St. Wendel (DE); WEBER, Tobias, 66606 St. Wendel (DE)
(74) Vertreter: Stolmár & Partner
(86) Internationale Anmeldenummer: PCT/EP2009/005638
(87) Internationale Veröffentlichungsnummer: WO 2010/015380

(56) Entgegenhaltungen:
- EP-A1- 1 864 784
- WO-A1-02/092329

## Beschreibung

Die vorliegende Erfindung betrifft ein Durchstrahllaserschweißverfahren zum Verschweißen eines Kunststoffhartteils mit einer Mehrschichtfolie, ein damit erhältliches Verbundteil und eine Verbundteil-Schweißanordnung, die in dem Verfahren eingesetzt wird.

Zur formschlüssigen Verbindung von Formteilen aus Kunststoffen, insbesondere aus verschiedenen Kunststoffen, existieren grundsätzlich verschiedene Möglichkeiten. Beispielsweise können zwei Formteile mittels Klebe- oder Schweißverfahren miteinander formschlüssig verbunden werden.

Unter den Schweißverfahren wird neben IR-Schweißen (siehe z.B. WO 2005/080067) das Schweißen mittels Laserstrahlung in letzter Zeit besonders intensiv untersucht (siehe z.B. WO 02/092329).

Das grundlegende physikalische Prinzip eines Schweißverfahrens mittels Laser erfordert, dass mindestens ein Teil des eingesetzten Laserlichts von dem Material mindestens eines der beiden miteinander zu verbindenden Formteile zumindest in einem Ausmaß absorbiert wird, dass es in Wärme umgewandelt werden kann und das Material an der durch das Laserlicht erwärmten Stelle durch Erwärmung fließfähig wird und eine schlüssige Verbindung mit dem Kunststoffmaterial des zweiten Formteils ermöglicht.

Eine spezielle Form des Laserschweißverfahrens, nämlich das Durchstrahllaserschweißverfahren, hat gegenüber anderen Schweißverfahren den Vorteil, dass auch komplexe Geometrien der Fügefläche schnell und rationell verschweißt werden können. Bei der Verschweißung ist es nötig, dass ein Fügepartner vom Laserstrahl vollständig durchstrahlt wird, d. h. also Laserstrahlung nicht absorbiert. Der zweite bzw. Teile des zweiten Fügepartners müssen das Laserlicht unter Hitzeentwicklung absorbieren können. Üblicherweise erfolgt die Bestrahlung von der Außenseite eines Fügepartners aus.

Das Schweißverfahren begrenzende Parameter sind die Wellenlänge des verwendeten Laserlichts und das Absorptionsverhalten des Kunststoffes bei dieser Wellenlänge. Insbesondere werden dabei Hochleistungsdiodenlaser mit einer Wellenlänge von 610-840 Nanometern und Nd:YAG-Festkörperlaser mit einer Wellenlänge von etwa 1050 Nanometern entweder im Bereich des sichtbaren Lichts (400-750 Nanometer) bzw. im infraroten Bereich verwendet. Es können allerdings auch CO2-Gaslaser mit einer Wellenlänge von etwa 11000 Nanometern verwendet werden.

Die Absorptionseigenschaften und damit die Bearbeitung von Kunststoffen sind in Abhängigkeit von der verwendeten Wellenlänge der Laserstrahlung sehr unterschiedlich. Inhomogenitäten im Kunststoff, wie beispielsweise Pigmente, Füll- oder Verstärkungsstoffe, aber auch kristalline Überstrukturen bei teilkristallisierenden Kunststoffen streuen die eingekoppelte Strahlung und setzen insbesondere die Eindringtiefe der Strahlung in den Kunststoff herab.

Trifft ein Laserstrahl auf ein zu erwärmendes Kunststoffteil, so wird die Laserstrahlung zu verschiedenen Teilen reflektiert, absorbiert und transmittiert. Die Intensitätsabnahme der in den Kunststoff eindringenden Strahlung lässt sich in Abhängigkeit von der Materialtiefe nach dem so genannten Bougourschen Gesetz beschreiben. Dabei nimmt die eingekoppelte Intensität exponentiell mit der Materialtiefe ab.

Probleme treten insbesondere durch die thermische Zersetzung durch Strahlungserwärmung von Kunststoffen, insbesondere mittels CO2-Lasern auf. Dies liegt an der schlechten Wärmeleitfähigkeit von Kunststoffen, da die Oberflächentemperatur des Kunststoff teils oftmals schnell ansteigt, wobei die Gefahr einer thermischen Materialzersetzung besteht. [Die Grundlagen von Laserschweißverfahren sind beispielsweise bei H. Potente et al., "Laserschweißen von Thermoplasten" (Plastverarbeiter 1995, Nr. 9, S. 42 ff.), F. Becker et al., "Trends bei Serienschweißverfahren" in Kunststoffe 87 (1997, S. 11 ff.) sowie von H. Puetz et al. in Modern Plastics, (1997, S. 121 ff.) dargestellt.]

Das Absorptionsverhalten und damit auch die Transmission von einem bei einer bestimmten Wellenlänge lasertransparenten Polymer bzw. Kunststoff kann z.B. durch das Zumischen von Absorbern gesteuert werden. Derartige Absorber sind beispielsweise Ruß und auch spezielle Farbstoffe, die in den letzten Jahren entwickelt wurden.

Eine Reihe von Farbstoffen, die ein derartiges steuerbares Absorptionsverhalten ermöglichen, sind kommerziell erhältlich und wurden speziell dafür entwickelt, Polymermischungen zugemischt zu werden, um eine Laserverschweißung bei definierten Wellenlängen zu ermöglichen. Dafür bieten sich auch die bei I.A. Jones et al. "Use of infrared dyes for Transmission Laser Welding of Plastics" (Tech 2000 Conference Proceedings, S. 1166 ff.) offenbarten Farbstoffe an.

Es gibt grundsätzlich mehrere Möglichkeiten, die vorstehend genannten Absorber in die zu verschweißenden Fügepartner, wie z.B. in eine Folie und in ein Kunststoffhartteil, einzubringen.

Als eine erste Möglichkeit wird der Absorber dem Kunststoffhartteil zugesetzt. Beim Verschweißen wird der Laserstrahl von der Folienseite her auf die Anordnung von Folie und Kunststoffhartteil gerichtet. Der Laser durchdringt dabei die für Laserlicht durchlässige Folie und trifft danach auf das Kunststoffhartteil auf. Das Kunststoffhartteil enthält den Absorber und stellt unter Wärmeentwicklung eine Schweißverbindung mit der Folie her. Durch das Vorliegen des Absorbers in dem Kunststoffhartteil ergeben sich jedoch die folgenden Nachteile. Der Absorber muss bei der Herstellung des Kunststoffhartteils in das Kunststoffhartteil eingemischt werden, bei größeren und/oder komplex geformten Kunststoffhartteilen muss eine große Menge an Absorber verwendet werden, und der Absorber ist abhängig vom Verfahren zur Herstellung des Kunststoffhartteils gegebenenfalls inhomogen in dem Kunststoffhartteil verteilt, so dass sich beim Schweißen unterschiedliche Schweißtemperaturen mit entsprechend unterschiedlicher Materialgüte ergeben.

Eine weitere Möglichkeit besteht darin, den Absorber als funktionelle Beschichtung zwischen dem Kunststoffhartteil und der Folie aufzubringen, wie z.B. mit einem Druckverfahren. Auch hier kann das Problem auftreten, dass der Absorber durch das Druckverfahren inhomogen aufgetragen wird. Ferner sind die bedruckten Schichten empfindlich und können in einem Produktionsprozess beschädigt werden. Beides kann durch daraus resultierende inhomogene Schweißnähte zu unterschiedlichen Materialgüten führen.

Alternativ kann der Absorber auch in die Folie eingemischt werden, um beim Durchstrahllaserschweißen die erforderliche Schweißtemperatur zu erzeugen. Dabei besteht das Problem, dass der Absorber, der homogen in der Folie verteilt ist, an allen Stellen der Durchstrahlungszone Wärme erzeugt. Das Erwärmen und "Aufschmelzen" der Folie erfolgt somit nicht nur im Fügebereich der Folie, sondern auch auf der entgegengesetzten Seite der Folie, die mit einem Anpresswerkzeug angepresst wird, was dazu führen kann, dass die Folie mit dem Anpresswerkzeug verklebt. Da die Folie in ihrem gesamten Durchstrahlungsquerschnitt aufgeschmolzen wird, ist ferner die Formstabilität der Folie nicht mehr gegeben, was dazu führen kann, dass die Folie, die gegebenenfalls unter Zugspannung auf dem Kunststoffhartteil aufliegt, ausgedünnt wird. Ferner können dadurch die Schweißzonen ausfransen und zu einer schlechteren Schweißnahtgüte führen. Da der Absorber homogen in der Folie verteilt ist, besteht auch das Problem, dass die Wärmeentwicklung durch den Laserstrahl zu stark werden kann und ein Lochbrand auftreten kann. Die vorstehend genannten Probleme können dadurch vermieden werden, dass die Konzentration des Absorbers in der Folie auf einen niedrigen Wert eingestellt wird. Dies kann jedoch dazu führen, dass abhängig von dem für die Folie verwendeten Kunststoffmaterial die Wärmeentwicklung der Folie im Fügebereich nicht mehr ausreicht, um eine vollständige Verschweißung zu erzielen.

Im Hinblick auf die vorstehenden Erläuterungen wird vorliegend mit "Aufschmelzen" der Folie kein thermodynamisches Schmelzen im Sinne eines Phasenübergangs verstanden, sondern der Prozess des Erweichens der Folie und des Erreichens eines plastischen Verarbeitungsvermögens unter den Schweißbedingungen. Von dem Begriff des "Aufschmelzens" kann auch das thermodynamische Schmelzen teilkristalliner Polymere im Folienverbund umfasst sein.

Die WO 02/092329 A1 beschreibt ein Verfahren zum Laserverschweißen einer Folie mit einem Kunststoffhartteil, bei dem zum Erzeugen eines Anpressdrucks auf die Folie eine Glas- oder Kunststoffplatte verwendet wird und die Folie und die Glas- oder Kunststoffplatte für das verwendete Laserlicht durchlässig sind und der Kunststoffteil laseropak ist.

Die EP 0 472 850 A2 beschreibt eine Laserschweißvorrichtung, mit der eine Deckelfolie mit einem Kunststoffbehälter als Hartteil verschweißt wird, wobei die Deckelfolie mit einem Anpresswerkzeug mechanisch an den Kunststoffbehälter gepresst wird und das Anpresswerkzeug ein Fenster aufweist, durch welches das verwendete Laserlicht hindurchtritt. Dabei ist die Deckelfolie für das verwendete Laserlicht durchlässig und der Kunststoffbehälter ist laseropak.

Die WO 01/80997 A1 betrifft ein Verfahren zur Herstellung von Kunststoffplatten mit einer Vielzahl von Vertiefungen, bei dem eine Folie und eine Kunststoffplatte mit Laserlicht verschweißt werden, wobei in die Kunststoffplatte ein Material einbezogen ist, das IR-Absorptionseigenschaften aufweist.

Die WO 2005/102588 beschreibt ein Verfahren zum Laserschweißen, welches das Anordnen eines ersten Werkstücks angrenzend an ein zweites Werkstück umfasst, wobei das erste Werkstück eine uneinheitliche Dicke aufweist, weiter das Anordnen einer Kompensationsplatte angrenzend an das erste Werkstück, derart, dass die kombinierte Dicke des ersten Werkstücks und der Kompensationsplatte im Wesentlichen einheitlich ist, und das Laserverschweißen des ersten Werkstücks und des zweiten Werkstücks umfasst. Dabei ist das erste Werkstück für das verwendete Laserlicht transparent und das zweite Werkstück ist laseropak.

Der vorliegenden Erfindung liegt daher die Aufgabe zugrunde, ein Verfahren zur Herstellung eines Verbundteils durch Durchstrahllaserschweißen bereitzustellen, das die vorstehend genannten Nachteile der Verfahren des Standes der Technik nicht aufweist. Ferner sollen erfindungsgemäß ein mit dem Verfahren erhältliches Verbundteil sowie eine Verbundteil-Schweißanordnung bereitgestellt werden, die in dem Verfahren eingesetzt wird.

Die Aufgabe wird gelöst durch ein Verfahren umfassend die Schritte des:
a)flächigen Anordnens einer Mehrschichtfolie, die eine Fügeschicht aufweist auf einem Kunststoffhartteil, derart, dass die Fügeschicht an das Kunststoffhartteil angrenzt, wobei die Fügeschicht einen Absorber für Laserlicht enthält,
b)des Anpressens der Mehrschichtfolie an das Kunststoffhartteil mit einem für Laserlicht durchlässigen Anpresswerkzeug, und
c)des Bestrahlens der im Schritt b) erhaltenen Anordnung mit Laserlicht von der Seite der Mehrschichtfolie.

Bei dem erfindungsgemäßen Verfahren wird als Folie eine Mehrschichtfolie mit einer Fügeschicht eingesetzt, die einen Absorber für Laserlicht enthält. Durch die Verwendung der Absorber-enthaltenden Fügeschicht wird die Schweißwärme im Wesentlichen nur in der Fügeschicht und in dem an die Fügeschicht angrenzenden Oberflächenbereich des Kunststoffhartteils erzeugt. Dadurch behält die Mehrschichtfolie ihre Formstabilität bei, da nur ein Teil der Mehrschichtfolie durch die Laserlichtabsorption des Absorbers aufgeschmolzen wird. Auf diese Weise wird ein Ausdünnen der Folie oder ein Ausfransen der Schweißnähte vermieden.

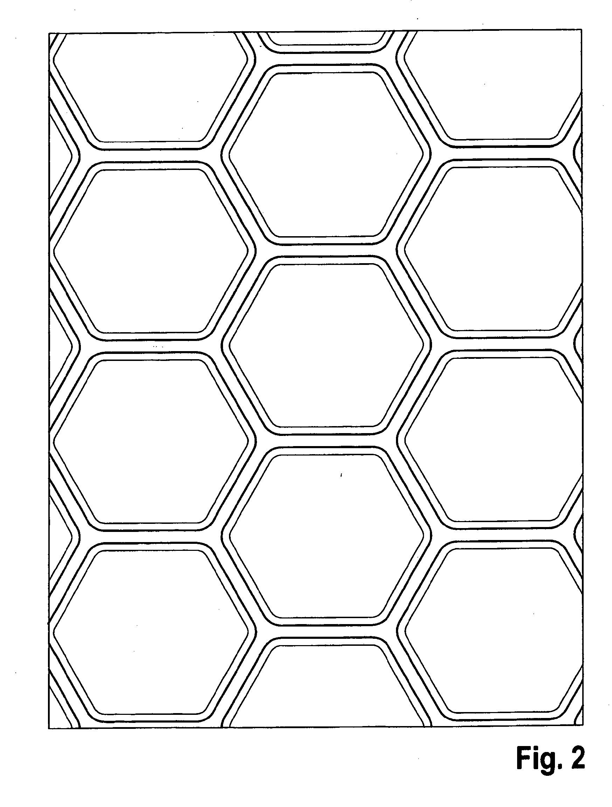

Überraschenderweise bleibt die Folie währendes Verschweißens gemäß dem erfindungsgemäßen Verfahren formstabil. D.h. selbst komplexe Prägestrukturen einer zu verschweißenden Folie bleiben unverändert trotz der einwirkenden Laserstrahlung (s. z.B. Figur 2).

Bei der Verwendung der Mehrschichtfolie in dem vorliegenden Verfahren kann die Situation vorliegen, dass dann, wenn das Kunststoffhartteil keine vollständig glatte und ebene Oberfläche aufweist, aufgrund der relativen Steifigkeit der Mehrschichtfolie nicht in allen Bereichen ein formschlüssiger Kontakt zwischen Mehrschichtfolie und Kunststoffhartteil vorliegt. Dies kann beispielsweise dann der Fall sein, wenn keine hohen Anforderungen an die Materialtoleranzen des Kunststoffhartteils gestellt werden oder wenn eine profilierte Kunststoffhartteiloberfläche mit einer Folie verschweißt werden soll. Als Folge davon wird beim Schweißen gegebenenfalls eine verminderte Schweißnahtgüte erhalten.

In einer bevorzugten Ausführungsform des erfindungsgemäßen Verfahrens umfasst das Verfahren deshalb ferner den Schritt des flächigen Anordnens eines weichelastischen Kunststoffteils zwischen der Mehrschichtfolie und dem Anpresswerkzeug. Das weichelastische Kunststoffteil hat die Eigenschaft, sich an die Konturen und Oberflächenunebenheiten des Kunststoffhartteils anzupassen und unter dem Anpressdruck des Anpresswerkzeugs die Mehrschichtfolie an die Konturen und Oberflächenunebenheiten des Kunststoffhartteils anzudrücken. Die Mehrschichtfolie erhält dadurch einen verbesserten Schweißkontakt, so dass eine bessere Schweißnahtgüte erhalten wird.

In einer weiteren bevorzugten Ausführungsform des erfindungsgemäßen Verfahrens ist das weichelastische Kunststoffteil aus einem Silikonkautschuk hergestellt, der für die Wellenlänge des verwendeten Lasers ausreichend durchlässig ist.

In einer weiteren bevorzugten Ausführungsform des erfindungsgemäßen Verfahrens ist das Anpresswerkzeug eine für Laserlicht durchlässige Glasplatte.

Bevorzugt weist die Mehrschichtfolie eine Prägestruktur, insbesondere eine hexagonale Prägung auf.

Vorteilhafterweise wird das Verfahren unter Schutzgas durchgeführt, um das Auftreten eines Lochbrands während des Laserschweißens zu vermeiden.

Das mit dem vorstehend beschriebenen Verfahren erhältliche Verbundteil umfasst erfindungsgemäß ein Kunststoffhartteil und eine Mehrschichtfolie, wobei die Mehrschichtfolie eine Fügeschicht aufweist, die einen Absorber für Laserlicht enthält, und wobei die Mehrschichtfolie derart flächig mit dem Kunststoffhartteil verbunden ist, bzw. verschmilzt, dass die Fügeschicht auf dem Kunststoffhartteil aufliegt.

Die Erfindung wird anhand von Ausführungsbeispielen in Verbindung mit der nachstehenden Figur näher erläutert, ohne dass dies als Einschränkung des Erfindungsgedankens verstanden werden soll.

Es zeigen:
- Fig. 1: eine schematische Darstellung einer erfindungsgemäßen Verbundteil-Schweißanordnung und
- Fig. 2: eine vergrößerte Ansicht einer Prägestruktur einer verschweißten Mehrschichtfolie.

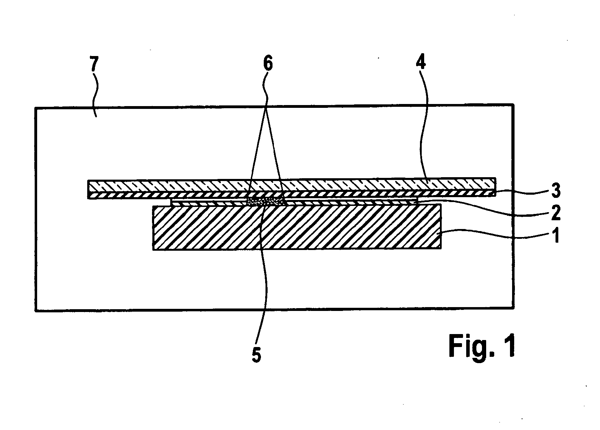

Im Folgenden wird eine Ausführungsform des erfindungsgemäßen Verfahrens, des mit dem Verfahren erhältlichen Verbundteils und der erfindungsgemäßen Verbundteil-Schweißanordnung unter Bezugnahme auf die Figuren 1 und 2 erläutert.

Gemäß der Fig. 1 ist eine Verbundteil-Schweißanordnung nach einer Ausführungsform der Erfindung aus einem Kunststoffhartteil 1, einer auf dem Kunststoffhartteil 1 flächig angeordneten Mehrschichtfolie 2, einem flächig auf der Mehrschichtfolie 2 angeordneten weichelastischen Kunststoffteil 3 und einem Anpresswerkzeug 4 ausgebildet.

Als Kunststoff für das Kunststoffhartteil 1 kann jeder schweißbare Thermoplast verwendet werden, der bei der Verschweißung mit einem entsprechenden Folienstück ausreichend thermodynamisch verträglich ist. Vorzugsweise ist das Kunststoffhartteil 1 aus Polypropylen ausgebildet. Weitere geeignete Materialien sind z.B. Polyethylen, Polyisopren, Polyethylenterephthalat (PET), Polycarbonat deren Blends und Copolymere davon.

Die Mehrschichtfolie 2 ist aus mindestens 2 Schichten zusammengesetzt, wobei eine der zwei Außenschichten eine Fügeschicht ist. Die Fügeschicht liegt in der in der Fig. 1 gezeigten Verbundteil-Schweißanordnung auf dem Kunststoffhartteil 1 auf. Es können selbstverständlich noch weitere Schichten entsprechend der Funktion der Folie vorliegen (ein sogenannter "Schichtverbund").Die Fügeschicht ist von Ihrer Formulierung auf das Material des Hartteils im Sinne der Verschweißbarkeit abgestimmt. Die Fügeschicht weist gegenüber der Trägerschicht typischerweise eine geringere Schichtdicke auf, um die Temperaturentwicklung möglichst nur in der Nähe der Schweißzone entstehen zu lassen. Zu dicke Fügeschichten tragen bei der Bestrahlung zuviel Wärme in den gesamten Folienverbund ein. Dadurch kann die Formstabiliät des Folienverbundes gefährdet werden.

Es ist denkbar, dass die Fügeschicht nur ein Zehntel der Dicke der zweiten Schicht bzw. des restlichen Schichtverbundes aufweist. Es sind aber auch Verhältnisse von kleiner 1:5 oder kleiner 1:3 denkbar. Ein Verhältnis von 1:1 kann bevorzugt dann gewählt werden, wenn der Schichtverbund bzw. die weitere Schicht neben der Fügeschicht vergleichsweise hochschmelzende weitere Schichten aufweist. Dies kann z.B. bei einem Verbund aus Polypropylen (PP) als Fügeschicht und Polyamid als Trägerschicht der Fall sein. Anstelle von Polyamid kann z.B. auch Polyethylenterephthalat (PET) verwendet werden.

In einer bevorzugten Ausführung, die insbesondere in der Medizintechnik zur Anwendung kommen kann, hat die Fügeschicht eine Dicke von 10-100 µm überwiegend bestehend aus 95-100 % eines Polypropylens ohne Einbezug des Absorbers. Für die Formulierung der Fügeschicht sind je nach Schweißanordnung aber unterschiedliche Polymerblends möglich. Nicht beschränkende Beispiele sind Polymere bzw. Co-Polymere aus C2-C10 Monomeren wie Polyethylen, Polypropylen, Polyisopren, und Butadien, olefinische Styrolblockcopolymere mit Blockcopolymeren aus Styrol etc., die kommerziell z.B. unter den Markennamen KRATON® G 1652, KRATON® G 1657, KRATON® G 1726, KRATON®FG 1901 und KRATON®FG 1924 erhältlich sind.

Die Fügeschicht enthält einen Absorber für Laserlicht, der das in die Mehrschichtfolie 2 eingestrahlte Laserlicht absorbiert und dadurch zur Erwärmung der Fügeschicht und der daran angrenzenden Bereiche des Kunststoffhartteils 1 und der Mehrschichtfolie 2 führt.

Als Absorber können beispielsweise sogenannte IR-Absorber verwendet werden. Diese absorbieren im IR Bereich, erscheinen also im sichtbaren Bereich transparent, was insbesondere bei der Verwendung der Folie in der Medizintechnik von Vorteil ist.

Vorzugsweise wird als Absorber Lumogen IR 788 der Firma BASF verwendet. Die Menge des in der Fügeschicht vorliegenden Absorbers beträgt im Allgemeinen bis zu 500 ppm, vorzugsweise 20-100 ppm. Es können auch andere Absorber verwendet werden, die im IR Bereich absorbieren. Lumogen IR 788 von BASF hat das Absorptionsmaxium bei 788 nm.

Entsprechend wählt man in diesem Fall als Laser mit der nächst gelegenen Emissionswellenlänge einen Diodenlaser mit einer Wellenlänge von 808 nm aus.

Die Mehrschichtfolie 2 weist in einer Ausführungsform eine Prägestruktur, insbesondere eine hexagonale Prägung auf. Ein Beispiel für eine hexagonale Prägung einer verschweißten Mehrschichtfolie ist in der Figur 2 gezeigt. Dabei ist der glatte Mehrschichtfolienbereich der gebildeten Schweißnaht zuzuordnen. Es ist ersichtlich, dass trotz der Erwärmung bei der Durchführung des Schweißverfahrens die Prägung der Folie erhalten bleibt, was zeigt, das die Mehrschichtfolie in dem erfindungsgemäßen Verfahren beim Verschweißen formstabil bleibt.

Als Material für das weichelastische Kunststoffteil 3, das gemäß einer bevorzugten Ausführungsform eingesetzt wird, wird vorzugsweise ein Silikonkautschuk verwendet, der für das verwendete Laserlicht durchlässig ist. Insbesondere wird als Silikonkautschuk eine sogenannte Silikonmatte verwendet. Diese hat üblicherweise eine Shorehärte von Shore A=30 bis 70. Die Dicke einer solchen Matte beträgt >1 mm vorzugsweise 5 mm. Es sind weitere Dicken erreichbar, z.B. 8 mm, 6 mm, 10 mm. Es sind auch Luftkissen oder mit Flüssigkeit gefüllte Kissen verwendbar. Es können jedoch auch andere weichelastische Kunststoffe verwendet werden, solange diese für das verwendete Laserlicht durchlässig sind.

Als Anpresswerkzeug 4 wird vorzugsweise eine Glasplatte verwendet, die aus einem Glas hergestellt ist, das für das verwendete Laserlicht durchlässig ist. Der Anpressdruck, den das Anpresswerkzeug 4 auf die Mehrschichtfolie 2 bzw. das weichelastische Kunststoffteil 3 ausübt, liegt vorzugsweise im Bereich von 0,1 bis 2 N/mm2. weichelastische Kunststoffteil 3 ausübt, liegt vorzugsweise im Bereich von 0,1 bis 2 N/mm2.

Das eingesetzte Laserlicht wird vorzugsweise von einem Diodenlaser erzeugt und weist eine Wellenlänge von insbesondere 808 nm auf. Insbesondere wird ein Diodenlaser Laserline LDF 1000-500 der Firma Laserline GmbH verwendet. Gemäß der Fig. 1 erzeugt das eingestrahlte Laserlicht 6 eine Schweißzone 5, in der die Kunststoffe der Fügeschicht der Mehrschichtfolie 2 und des Kunststoffhartteils 1 lokal aufgeschmolzen werden. Nach dem Abkühlen der Schweißzone sind die Mehrschichtfolie 3 und das Kunststoffhartteil 1 fest miteinander verschweißt.

Zur Durchführung des erfindungsgemäßen Durchstrahllaserschweißverfahrens wird die in der Fig. 1 gezeigte Verbundteil-Schweißanordnung vorzugsweise in einer Schutzgasatmosphäre 7 angeordnet, wodurch das Auftreten eines Lochbrands während des Schweißens sicher verhindert werden kann.

Durch das erfindungsgemäße Verfahren, bei dem die vorstehend beschriebene Verbundteil-Schweißanordnung eingesetzt wird, können die folgenden Vorteile realisiert werden.

Durch das Vorliegen des Absorbers in der Fügeschicht der Mehrschichtfolie ist ein definiertes Verschweißen möglich, ohne dass ein großer Teil der Mehrschichtfolie einem Erweichen unterliegt, da der Temperatureintrag lokal begrenzt ist. Vorgefertigte Strukturen in der Folie wie z.B. einer Prägung bleiben überraschenderweise erhalten (Figur 2). Durch die Verwendung des weichelastischen Kunststoffteils ist es ferner erfindungsgemäß möglich, ein Verschweißen nicht nur auf ebenen Kunststoffhartteiloberflächen durchzuführen, sondern auch auf unebenen und leicht gewölbten Flächen, wobei für das Verschweißen auch zähe Mehrschichtfolien verwendet werden können. An die Toleranzen der Fügepartner werden dabei nur geringe Anforderungen gestellt. Ferner ist ein nahezu partikelfreies Fügen möglich und es erfolgt kein Schweißaustrieb am Rand der Schweißnaht.

Mit dem erfindungsgemäßen Verfahren kann demnach eine optisch und mechanisch einwandfreie Schweißnaht erhalten werden.

## Patentansprüche

1. Verfahren zur Herstellung eines Verbundteils durch Durchstrahllaserschweißen, umfassend die Schritte des:
a) flächigen Anordnens einer Mehrschichtfolie (2), die eine Fügeschicht aufweist, auf einem Kunststoffhartteil (1), derart, dass die Fügeschicht an das Kunststoffhartteil (1) angrenzt, wobei die Fügeschicht einen Absorber für Laserlicht enthält,
b) des Anpressens der Mehrschichtfolie (2) an das Kunststoffhartteil (1) mit einem für Laserlicht durchlässigen Anpresswerkzeug (4), und
c) des Bestrahlens der im Schritt b) erhaltenen Anordnung mit Laserlicht von der Seite der Mehrschichtfolie (2).

2. Verfahren nach Anspruch 1, das zwischen den Schritten a) und b) ferner den Schritt des flächigen Anordnens eines weichelastischen Kunststoffteils (3) zwischen der Mehrschichtfolie (2) und dem Anpresswerkzeug (4) umfasst, so dass im Schritt b) die Mehrschichtfolie (2) mittels des weichelastischen Kunststoffteils (3) durch das Anpresswerkzeug (4) auf das Kunststoffhartteil (1) gepresst wird.

3. Verfahren nach Anspruch 2, bei dem das weichelastische Kunststoffteil (3) aus Silikonkautschuk hergestellt ist.

4. Verfahren nach einem der Ansprüche 1 bis 3, bei dem das Anpresswerkzeug (4) eine für Laserlicht durchlässige Glasplatte ist.

5. Verfahren nach einem der Ansprüche 1 bis 4, wobei das Verfahren unter Schutzgas durchgeführt wird.

6. Verbundteil, umfassend ein Kunststoffhartteil (1) und eine Mehrschichtfolie (2), wobei die Mehrschichtfolie (2) eine Fügeschicht aufweist, die einen Absorber für Laserlicht enthält, und wobei die Mehrschichtfolie (2) derart flächig mit dem Kunststoffhartteil (1) verbunden ist, dass die Fügeschicht auf dem Kunststoffhartteil (1) aufliegt, wobei die Fügeschicht eine Dicke von 10 bis 100 µm aufweist.

7. Verbundteil nach Anspruch 6, wobei das Kunststoffhartteil (1) aus einem Kunststoff, ausgewählt aus der Gruppe, bestehend aus Polyethylen, Polypropylen, Polyisopren und deren Blends und Copolymere, PET sowie Polycarbonate, hergestellt ist.

8. Verbundteil nach Anspruch 6 oder 7, wobei die Fügeschicht der Mehrschichtfolie (2) aus einem Material, ausgewählt aus der Gruppe, bestehend aus Polypropylen, Polyethylen, Polyisopren, olefinische Styrolblockcopolymere, deren Blends sowie Copolymere davon, hergestellt ist.

9. Verbundteil nach einem der Ansprüche 6 bis 8, wobei die von der Fügeschicht verschiedenen Schichten der Mehrschichtfolie (2) aus einem oder mehreren von Polyamid und Polyethylenterephthalat hergestellt sind.

10. Verbundteil nach einem der Ansprüche 6 bis 9, wobei der Absorber für Laserlicht aus IR Absorbern ausgewählt ist, die IR Strahlung im Bereich von 770 - 1000 nm absorbieren.

11. Verbundteil nach einem der Ansprüche 6 bis 10, wobei der Absorber für Laserlicht in der Fügeschicht in einer Menge von 50 bis 100 ppm, bezogen auf das Gewicht der Fügeschicht, vorliegt.

12. Verbundteil-Schweißanordnung zur Herstellung eines Verbundteils nach einem der Ansprüche 6 bis 11, umfassend
ein Kunststoffhartteil (1),
eine Mehrschichtfolie (2), die eine Fügeschicht aufweist, wobei die Mehrschichtfolie (2) derart flächig auf dem Kunststoffhartteil (1) angeordnet ist, dass die Fügeschicht auf dem Kunststoffhartteil (1) aufliegt, wobei die Fügeschicht einen Absorber für Laserlicht enthält, und ein auf der Mehrschichtfolie (2) angeordnetes, für Laserlicht durchlässiges Anpresswerkzeug (4).

13. Verbundteil-Schweißanordnung nach Anspruch 12, bei der zwischen der Mehrschichtfolie (2) und dem Anpresswerkzeug (4) ein weichelastisches Kunststoffteil (3) flächig angeordnet ist.

14. Verbundteil-Schweißanordnung nach Anspruch 13, bei der das weichelastische Kunststoffteil (3) aus Silikonkautschuk hergestellt ist.

15. Verbundteil-Schweißanordnung nach einem der Ansprüche 12 bis 14, bei der das Anpresswerkzeug (4) eine für Laserlicht durchlässige Glasplatte ist.

16. Verbundteil-Schweißanordnung nach einem der Ansprüche 12 bis 15, bei der die Mehrschichtfolie eine Prägestruktur aufweist.

## Claims

1. Method of producing a composite by transmission laser welding, comprising the steps:
a) flat arrangement of a multilayer film (2), which has a joint layer, on a hard plastic part (1) such that the joint layer abuts the hard plastic part (1), wherein the joint layer contains an absorber for laser light,
b) pressing of the multilayer film (2) against the hard plastic part (1) with a pressure tool (4) permeable for laser light, and
c) irradiation of the arrangement obtained in step b) with laser light from the multilayer film (2) side.

2. Method according to claim 1, which comprises furthermore between steps a) and b) the step of the flat arrangement of a flexible plastic part (3) between the multilayer film (2) and the pressure tool (4), with the result that in step b) the multilayer film (2) is pressed by the pressure tool (4) onto the hard plastic part (1) by means of the flexible plastic part (3).

3. Method according to claim 2, in which the flexible plastic part (3) is produced from silicone rubber.

4. Method according to one of claims 1 to 3, in which the pressure tool (4) is a glass sheet permeable for laser light.

5. Method according to one of claims 1 to 4, wherein the method is carried out under protective gas.

6. Composite, comprising a hard plastic part (1) and a multilayer film (2), wherein the multilayer film (2) has a joint layer which contains an absorber for laser light, and wherein the multilayer film (2) is connected flat to the hard plastic part (1) such that the joint layer rests on the hard plastic part (1), wherein the joint layer has a thickness of 10 to 100 µm.

7. Composite according to claim 6, wherein the hard plastic part (1) is produced from a plastic selected from the group consisting of polyethylene, polypropylene, polyisoprene and their blends and copolymers, PET as well as polycarbonates.

8. Composite according to claim 6 or 7, wherein the joint layer of the multilayer film (2) is produced from a material selected from the group consisting of polypropylene, polyethylene, polyisoprene, olefinic styrene block copolymers, their blends as well as copolymers thereof.

9. Composite according to one of claims 6 to 8, wherein the layers other than the joint layer of the multilayer film (2) are produced from one or more of polyamide and polyethylene terephthalate.

10. Composite according to one of claims 6 to 9, wherein the absorber for laser light is selected from IR absorbers which absorb IR radiation in the range of from 770 - 1000 nm.

11. Composite according to one of claims 6 to 10, wherein the absorber for laser light is present in the joint layer in a quantity of 50 to 100 ppm, relative to the weight of the joint layer.

12. Composite-welding arrangement for producing a composite according to one of claims 6 to 11, comprising
a hard plastic part (1),
a multilayer film (2) which has a joint layer, wherein the multilayer film (2) is arranged flat on the hard plastic part (1) such that the joint layer rests on the hard plastic part (1), wherein the joint layer contains an absorber for laser light, and a pressure tool (4) permeable for laser light arranged on the multilayer film (2).

13. Composite-welding arrangement according to claim 12, in which a flexible plastic part (3) is arranged flat between the multilayer film (2) and the pressure tool (4).

14. Composite-welding arrangement according to claim 13, in which the flexible plastic part (3) is produced from silicone rubber.

15. Composite-welding arrangement according to one of claims 12 to 14, in which the pressure tool (4) is a glass sheet permeable for laser light.

16. Composite-welding arrangement according to one of claims 12 to 15, in which the multilayer film has an embossed structure.

## Revendications

1. Procédé de fabrication d'une pièce composite par soudage laser par transmission, comprenant les étapes de :
a) l'agencement plan d'un film multicouches (2) qui présente une couche de jonction sur une partie dure en plastique (1) de telle sorte que la couche de jonction jouxte la partie dure en plastique (1), dans lequel la couche de jonction contient un absorbeur pour lumière laser,
b) du pressage du film multicouches (2) contre la partie dure en plastique (1) avec un outil de pressage (4) perméable à la lumière laser, et
c) de l'irradiation de l'agencement obtenu à l'étape b) avec de la lumière laser du côté du film multicouches (2).

2. Procédé selon la revendication 1, qui comprend en outre entre les étapes a) et b) l'étape de l'agencement plan d'une partie plastique souple (3) entre le film multicouches (2) et l'outil de pressage (4) de sorte qu'à l'étape b), le film multicouches (2) est pressé sur la partie dure en plastique (1) au moyen de la partie plastique souple (3) par l'outil de pressage (4).

3. Procédé selon la revendication 2, lors duquel la partie plastique souple (3) est fabriquée en caoutchouc de silicone.

4. Procédé selon l'une quelconque des revendications 1 à 3, lors duquel l'outil de pressage (4) est une plaque de verre perméable à la lumière laser.

5. Procédé selon l'une quelconque des revendications 1 à 4, dans lequel le procédé est effectué sous gaz protecteur.

6. Pièce composite, comprenant une partie dure en plastique (1) et un film multicouches (2), dans laquelle le film multicouches (2) présente une couche de jonction qui contient un absorbeur pour lumière laser, et dans laquelle le film multicouches (2) est relié de manière plane à la partie dure en plastique (1) de telle sorte que la couche de jonction repose sur la partie dure en plastique (1), dans laquelle la couche de jonction présente une épaisseur de 10 à 100 µm.

7. Pièce composite selon la revendication 6, dans laquelle la partie dure en plastique (1) est fabriquée en un plastique sélectionné parmi le groupe constitué du polyéthylène, polypropylène, polyisoprène et leurs mélanges et copolymères, PET ainsi que des polycarbonates.

8. Pièce composite selon la revendication 6 ou 7, dans laquelle la couche de jonction du film multicouches (2) est fabriquée en un matériau sélectionné parmi le groupe constitué du polypropylène, polyéthylène, polyisoprène, copolymères séquencés de styrène oléfiniques, leurs mélanges ainsi que des copolymères de ceux-ci.

9. Pièce composite selon l'une quelconque des revendications 6 à 8, dans laquelle les couches différentes de la couche de jonction du film multicouches (2) sont fabriquées en un ou plusieurs matériaux parmi le polyamide et le polyéthylène téréphtalate.

10. Pièce composite selon l'une quelconque des revendications 6 à 9, dans laquelle l'absorbeur pour lumière laser est sélectionné parmi des absorbeurs IR qui absorbent du rayonnement IR dans la plage de 770 à 1000 nm.

11. Pièce composite selon l'une quelconque des revendications 6 à 10, dans laquelle l'absorbeur pour lumière laser est présent dans la couche de jonction en une quantité de 50 à 100 ppm par rapport au poids de la couche de jonction.

12. Agencement de soudure de pièce composite pour la fabrication d'une pièce composite selon l'une quelconque des revendications 6 à 11, comprenant
une partie dure en plastique (1),
un film multicouches (2) qui présente une couche de jonction, dans lequel le film multicouches (2) est disposé de manière plane sur la partie dure en plastique (1) de telle sorte que la couche de jonction repose sur la partie dure en plastique (1), dans lequel la couche de jonction contient un absorbeur pour lumière laser, et un outil de pressage (4) disposé sur le film multicouches (2), perméable à la lumière laser.

13. Agencement de soudure de pièce composite selon la revendication 12, pour lequel une partie plastique souple (3) est disposée de manière plane entre le film multicouches (2) et l'outil de pressage (4).

14. Agencement de soudure de pièce composite selon la revendication 13, pour lequel la partie plastique souple (3) est fabriquée en caoutchouc de silicone.

15. Agencement de soudure de pièce composite selon l'une quelconque des revendications 12 à 14, pour lequel l'outil de pressage (4) est une plaque de verre perméable à la lumière laser.

16. Agencement de soudure de pièce composite selon l'une quelconque des revendications 12 à 15, pour lequel le film multicouches présente une structure gaufrée.
